# EUROPEAN PATENT APPLICATION

(11) **EP 4 648 240 A1**
(43) Date of publication of application: **12.11.2025**
(21) Application number: 25174479.3
(22) Date of filing: 06.05.2025
(51) Int. Cl.: H02G 5/02, H02B 1/21

(54) **DEVICE FOR SUPPORTING BUSBAR AND SWITCHGEAR**

(30) Priority: 06.05.2024 CN 202410551029
(71) Applicant: ABB SCHWEIZ AG, 5400 Baden (CH)
(72) Inventor: ZOU, Shengjun, Xiamen 361101 (CN); WANG, Yong'an, Xiamen 361000 (CN); LIN, Yibin, Xiamen 361002 (CN); XIAO, Feng, Xiamen 361004 (CN)
(74) Representative: Zimmermann & Partner Patentanwälte mbB

(57) **Abstract**

The present disclosure relates to a device (10) for supporting a busbar, and a switchgear. The device comprises: at least one pair of supports, each pair of supports comprising: a first busbar support (110), comprising a first groove (112) extending through the first busbar support (110) in the thickness direction (Z); and a second busbar support (120), arranged opposite the first busbar support (110) and comprising a second groove (122) extending through the second busbar support (120) in the thickness direction (Z), wherein the first groove (112) and the second groove (122) are arranged opposite each other to form a shape adapted to receive the busbar in the thickness direction (Z), the thickness direction (Z) being parallel to or coincident with a thickness direction (Z) of the busbar; and a first fixing bracket (130), fixed to the at least one pair of supports and configured to support the at least one pair of supports.

## Description

### Technical Field

The present disclosure relates to a field of power delivery and, in particular, to a switchgear and devices within switchgear for supporting busbars.

### Background Art

Busbars are generally used in a switchgear to transmit electric power. Large numbers of busbars are configured in switchgear; these busbars are close to each other, and arranged in the switchgear at a high density. In terms of the switchgear, especially a medium- and low-voltage switchgear, busbars must be reliably fixed in the switchgear. In particular, it is necessary to prevent busbars of different phases from coming too close to each other or even touching, even if the busbars experience deformation or twisting. Conventional busbar support devices are unsatisfactory in use, so there is a need that busbar support devices can be further improved.

### Summary of the Invention

It is an object of the present disclosure to provide a device for supporting a busbar, and a switchgear, to solve one or more of the above problems and other potential technical problems.

A first aspect of the present disclosure provides a device for supporting a busbar. The device comprises: at least one pair of supports, made of an insulating material and comprising a length direction, a width direction and a thickness direction, each pair of supports comprising: a first busbar support, comprising a first groove extending through the first busbar support in the thickness direction; and a second busbar support, arranged opposite the first busbar support and comprising a second groove extending through the second busbar support in the thickness direction, wherein the first groove and the second groove are arranged opposite each other to form a shape adapted to receive the busbar in the thickness direction, the thickness direction being parallel to or coincident with a thickness direction of the busbar; and a first fixing bracket, fixed to the at least one pair of supports and configured to support the at least one pair of supports. The device for supporting a busbar according to the present disclosure can provide reliable support for the busbar, and has enhanced safety.

In some embodiments, the first busbar support may comprise a pair of first holes, which run through the first busbar support in the length direction and are located at two sides of the first groove, respectively; the second busbar support comprises a pair of second holes, which run through the second busbar support in the length direction and are located at two sides of the second groove, respectively; and the device further comprises at least one pair of threaded fasteners extending in the length direction, each of the threaded fasteners being configured to extend through the corresponding first hole and the corresponding second hole to fix the first busbar support and the second busbar support to the first fixing bracket.

In some embodiments, the first busbar support may comprise a pair of first transverse portions respectively located at two sides of the first groove in the width direction, the pair of first holes being respectively located at the corresponding first transverse portions; and the second busbar support comprises a pair of second transverse portions respectively located at two sides of the second groove in the width direction, the pair of second holes being respectively located at the corresponding second transverse portions, and in a state in which the at least one pair of supports are fixed together, the pair of first transverse portions are respectively separated from the corresponding second transverse portions by a gap.

In some embodiments, only one first transverse portion of the pair of first transverse portions may comprise a first post protruding in the length direction, the first post being provided with a hole allowing the threaded fastener to pass through, and the first post being received in the corresponding second hole; and only one second transverse portion of the pair of second transverse portions comprises a second post protruding in the length direction, the second post being provided with a hole allowing the threaded fastener to pass through, and the second post being received in the corresponding first hole.

In some embodiments, each of the pair of first transverse portions may comprise a post protruding in the length direction, the first hole extending through the post, and in a state in which the first busbar support and the second busbar support are fixed together, the post is received in the corresponding second hole.

In some embodiments, the first fixing bracket may be disposed at one side in the length direction of the at least one pair of supports, and the first fixing bracket is fastened to the threaded fastener by means of at least one nut.

In some embodiments, the threaded fastener and the first fixing bracket may both be made of a metal material.

In some embodiments, the at least one pair of supports may comprise a first pair of supports, a second pair of supports and a third pair of supports arranged adjacently in the width direction, the first pair of supports, the second pair of supports and the third pair of supports being configured to receive a first phase busbar, a second phase busbar and a third phase busbar, respectively; the first fixing bracket is disposed at one side in the length direction of the at least one pair of supports, and is configured to connect together the second busbar support of the first pair of supports, the second busbar support of the second pair of supports, and the second busbar support of the third pair of supports; and the device further comprises a second fixing bracket disposed at the other side in the length direction of the at least one pair of supports, the second fixing bracket being configured to connect together the first busbar support of the first pair of supports, the first busbar support of the second pair of supports, and the first busbar support of the third pair of supports.

In some embodiments, the device may further comprise a position adjustment means, configured to adjust positions of the first pair of supports, the second pair of supports and the third pair of supports along corresponding threaded fasteners of the at least one pair of threaded fasteners in the length direction.

In some embodiments, the position adjustment means may comprise three position adjustment assemblies for the first pair of supports, the second pair of supports and the third pair of supports, respectively, each of the position adjustment assemblies comprising: a first adjustment member, disposed at a first side in the length direction of the first busbar support of each pair of supports and comprising a pair of threaded holes, the pair of threaded holes being adapted to be passed through by the pair of threaded fasteners and engage with the corresponding threaded fasteners ; a pair of second adjustment members, disposed at a second side in the length direction of the second busbar support of each pair of supports and movably disposed on the corresponding threaded fasteners, the second side being opposite the first side, and each second adjustment member of the pair of second adjustment members being rotatable relative to the threaded fastener to change the position of said each pair of supports in the length direction.

In some embodiments, the first busbar support may comprise a groove at the first side, the groove receiving the first adjustment member in a shape-fitted manner.

In some embodiments, the position adjustment means may comprise: a first elongated hole disposed at a first side in the length direction of the first busbar support of each pair of supports, the first elongated hole extending through the first busbar support in the thickness direction and extending at least partially in the length direction, the first busbar support being fixed to the second fixing bracket by means of a first fastener provided in the thickness direction; and a second elongated hole disposed at a second side in the length direction of the second busbar support of each pair of supports, the second side being opposite the first side, the second elongated hole extending through the second busbar support in the thickness direction and extending at least partially in the length direction, the second busbar support being fixed to the first fixing bracket by means of a second fastener provided in the thickness direction; wherein the position adjustment means is configured to adjust positions of the first fastener and the second fastener in the corresponding elongated holes in the length direction, so as to adjust the positions of the first pair of supports, the second pair of supports and the third pair of supports in the length direction.

In some embodiments, the first busbar support may comprise a first mounting part protruding from a main body of the first busbar support in the length direction, the first mounting part comprising two said first elongated holes; and the second busbar support comprises a second mounting part protruding from a main body of the second busbar support in the length direction, the second mounting part comprising two said second elongated holes.

In some embodiments, the busbar may comprise a tubular cross section.

A second aspect of the present disclosure provides a switchgear. The switchgear comprises: at least one busbar; and at least one device for supporting a busbar according to the first aspect.

### Brief Description of the Drawings

The above and other objects, features and advantages of embodiments of the present disclosure will become readily understood by reading the following detailed description with reference to the accompanying drawings. In the drawings, some embodiments of the disclosure are shown by way of example, without limitation.
Fig. 1 shows an overall schematic view of a switchgear according to embodiments of the present disclosure.
Fig. 2 shows a perspective schematic view of a device for supporting a busbar according to a first embodiment of the present disclosure, wherein busbars are provided on the device.
Fig. 3 shows a perspective schematic view of the device for supporting a busbar according to the first embodiment of the present disclosure, wherein the busbars have been removed from the device.
Fig. 4 shows a schematic structural view of a busbar support of the device for supporting a busbar according to the first embodiment of the present disclosure.
Fig. 5 shows an exploded schematic view of the device for supporting a busbar according to the first embodiment of the present disclosure.
Fig. 6 shows a perspective schematic view of a device for supporting a busbar according to a second embodiment of the present disclosure.
Fig. 7 shows a schematic plan view of the device for supporting a busbar according to the second embodiment of the present disclosure.
Fig. 8 shows an exploded schematic view of the device for supporting a busbar according to the second embodiment of the present disclosure.
Fig. 9 shows a schematic plan view of a device for supporting a busbar according to a third embodiment of the present disclosure.
Fig. 10 shows a schematic structural view of a busbar support of the device for supporting a busbar according to the third embodiment of the present disclosure.
Fig. 11 shows an exploded schematic view of the device for supporting a busbar according to the third embodiment of the present disclosure.

In the various drawings, identical or corresponding reference numerals indicate identical or corresponding parts.

### Detailed Description of the Invention

Preferred embodiments of the present disclosure will be described in more detail below with reference to the accompanying drawings. While preferred embodiments of the disclosure are shown in the drawings, it should be understood that the disclosure may be implemented in various forms and should not be limited by the embodiments set forth herein. Rather, these embodiments are provided to make the disclosure more thorough and complete, and to enable the scope of the disclosure to be fully communicated to those skilled in the art.

Reference within the framework of this specification to "an embodiment" or "an implementation" is intended to indicate that the particular configuration, structure or characteristic described with respect to that embodiment is included in at least one embodiment. Therefore, phrases such as "in embodiments" and "in an embodiment" which may appear in various aspects of this specification do not necessarily refer specifically to the same embodiment. In addition, particular configurations, structures or characteristics may be combined in any appropriate manner in one or more embodiments.

As used herein, the term "comprising" and variants thereof mean open-ended inclusion, i.e. "including but not limited to". Unless otherwise stated, the term "or" means "and/or". The term "based on" means "based at least in part on". The terms "an exemplary embodiment" and "an embodiment" mean "at least one exemplary embodiment". The term "another embodiment" means "at least one other embodiment". Words indicating placement or positional relationships, such as the terms "upper", "lower", "front" and "rear", are all based on the orientational or positional relationships shown in the drawings, and are only intended to facilitate description of the principles of the disclosure, not to indicate or imply that the element referred to must have a particular orientation or be constructed or operated in a particular orientation, so must not be construed as a limitation of the disclosure.

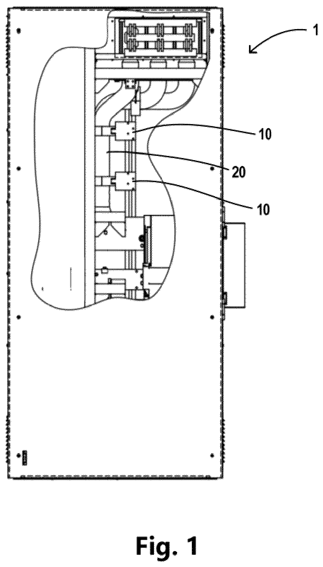

Fig. 1 shows an overall schematic view of a switchgear 1 according to embodiments of the present disclosure. The switchgear 1 may for example be realized in the form of a switch cabinet, which may contain various switching devices (such as circuit breakers, etc.), multi-phase busbars 20 for transmitting electric power, and various electrical parameter testing components, etc. The switchgear 1 generally comprises three-phase busbars or four-phase busbars, and also comprises multiple branches. As a result, the density of busbars in the switchgear is extremely high, posing a major threat to power safety. The busbars 20 need be fixed to a frame of the switch cabinet with an aid of one or more devices 10.

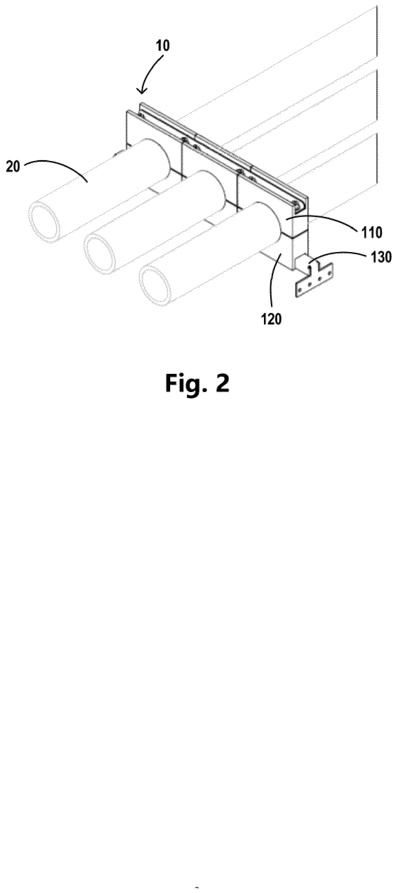

Conventionally, supports such as insulators are used to fix the busbars to the switch cabinet. Insulator supports of this type are not suitable for unaligned busbar arrangements and scenarios where busbars are separated by a short distance. In particular, in a situation where busbars of different phases are separated by a short distance, if phase busbars experience major deformation, one phase busbar will come into contact with an adjacent phase busbar extremely easily, and this will pose a major risk to power safety. A device for supporting a busbar is provided in accordance with the present disclosure, the device being capable of supporting a busbar reliably. The device for supporting a busbar according to embodiments of the present disclosure is described in detail below with reference to Figs. 2 - 11.

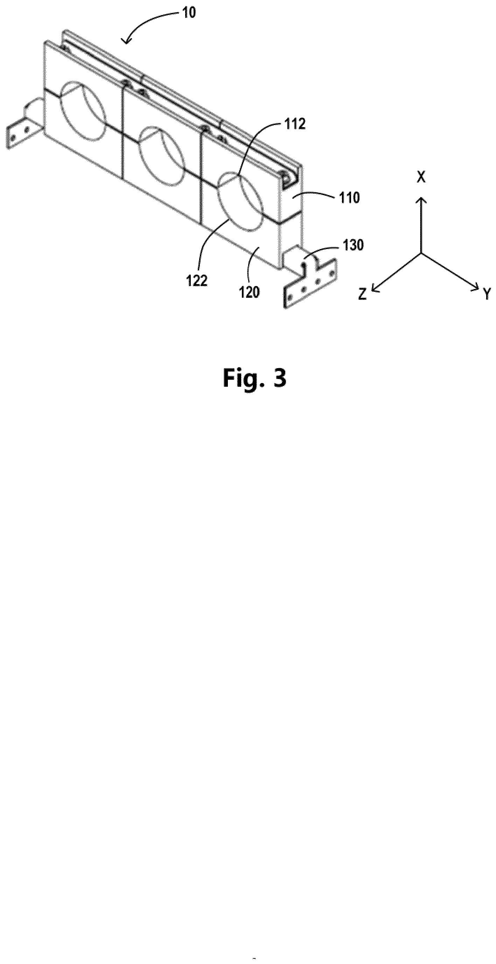

Figs. 2 - 5 show schematic structural views of a device 10 for supporting a busbar according to a first embodiment of the present disclosure. Fig. 2 shows a view of a state in which a busbar 20 is supported by the device 10, and Fig. 3 shows a view in which the busbar has been removed from the device 10. As shown in Figs. 2 - 3, the device 10 may comprise at least one pair of supports and a fixing bracket 130. In the illustrated embodiment, three pairs of supports are shown. It should be understood that this is merely exemplary. In other embodiments, there may be one pair, four pairs, or other number of supports.

Each pair of supports may comprise a length direction X, a width direction Y, and a thickness direction Z. Each pair of supports comprises a first busbar support 110, and a second busbar support 120 arranged opposite the first busbar support 110. The first busbar support 110 and the second busbar support 120 have the same shape, or similar shapes. The first busbar support 110 and the second busbar support 120 are arranged opposite each other, and together form a space suitable for holding the busbar 20.

In some embodiments, as shown in FIG. 3, the first busbar support 110 may comprise a first groove 112 extending through the first busbar support 110 in the thickness direction Z. Similarly, the second busbar support 120 may comprise a second groove 122 extending through the second busbar support 120 in the thickness direction Z. In a state in which the first busbar support 110 and the second busbar support 120 are fitted together, the first groove 112 and the second groove 122 form a shape adapted to receive the busbar 20 in the thickness direction Z. As shown in Fig. 2, the thickness direction Z is parallel to or coincident with a thickness direction Z of the busbar.

In the illustrated embodiment, the busbar 20 comprises a tubular cross section, which is particularly helpful in achieving a chimney effect in the busbar, thus helping to dissipate heat. It will be appreciated that the busbar 20 may have another suitable shape. The first groove 112 and the second groove 122 may similarly be formed in other shapes that match the shape of the busbar. In some embodiments, a size of an aperture formed by the combination of the first groove 112 and the second groove 122 may be slightly smaller than a peripheral dimension of the busbar 20, so as to hold the busbar more robustly.

Each pair of supports is made of an insulating material. As an example, they may be injection moulded from an insulating material. In some embodiments, the supports may be die cast from an insulating material. Dielectric performances between the busbar 20 and an adjacent busbar can be effectively enhanced by means of the insulating material. This makes it possible to arrange multiple busbars close together.

The fixing bracket 130 is fixed to the first busbar support 110 and the second busbar support 120, so as to support the first busbar support 110 and the second busbar support 120. The fixing bracket 130 may be made of a high-strength material, for example, a metal such as steel. The fixing bracket 130 may comprise components for fastening, such as holes, and the fixing bracket 130 may be fixed in a suitable position in the switch cabinet by means of the holes and fasteners, such as screws.

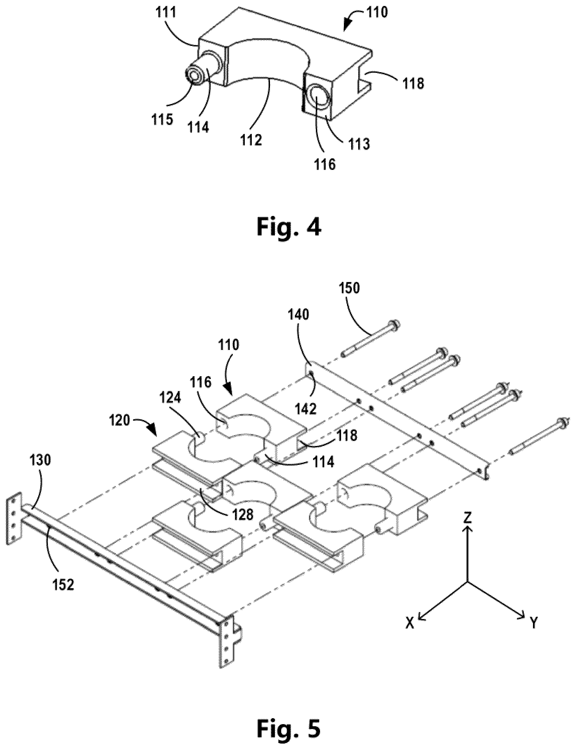

Fig. 4 shows a schematic structural view of a busbar support 110 of the device for supporting a busbar according to the first embodiment of the present disclosure. The first busbar support 110 and the second busbar support 120 may have similar structures. As shown in Figs. 4 and 5, the busbar support 110 may comprise a pair of first holes 116 (only one being shown in the figures); the pair of first holes 116 may be located at two sides of the first groove 112, and run through the first busbar support 110 in the length direction X.

Similarly, the second busbar support may comprise a pair of second holes (not shown); the pair of second holes are located at two sides of the second groove 122, and run through the second busbar support 120 in the length direction X. As shown in Fig. 5, the device 10 may also comprise at least one pair of threaded fasteners 150 extending in the length direction X. Each threaded fastener 150 is configured to extend through a corresponding first hole or a corresponding second hole. The first busbar support 110 and the second busbar support 120 can thus be fixed together by means of the threaded fasteners 150. By such an arrangement, the installation strength between the first busbar support 110 and the second busbar support 120 can be ensured.

In some embodiments, as shown in Figs. 4 and 5, the first busbar support 110 may comprise a pair of first transverse portions 111, 113, respectively located at two sides of the first groove 112 in the width direction Y. Similarly, the second busbar support 120 comprises a pair of second transverse portions, respectively located at two sides of the second groove 122 in the width direction Y. In a state in which the first busbar support 110 and the second busbar support 120 are fixed together, the pair of first transverse portions 111, 113 are separated from the corresponding second transverse portions respectively by a gap, for example 1 mm. The gap provided between the first transverse portion 111, 113 and the corresponding second transverse portion allows the busbar supporting device to be fixed securely when the first busbar support 110 and the second busbar support 120 are fixed, for example, by means of the threaded fasteners 150. In some embodiments, the pair of first holes are respectively located at the corresponding first transverse portions 111, 113, and the pair of second holes are respectively located at the corresponding second transverse portions.

In some embodiments, as shown in Figs. 4 and 5, only one first transverse portion 111 of the pair of first transverse portions 111, 113 of the first busbar support 110 may comprise a post 114 protruding in the length direction X, and a hole 115 allowing the threaded fastener 150 to pass through may be provided in the post 114. The second busbar support 120 may have exactly the same structure as the first busbar support 110; in use, it is only necessary to arrange the second busbar support 120 and the first busbar support 110 in mirror symmetry with each other. In a state in which the first busbar support 110 and second busbar support 120 are fixed together, the first post 114 of the first busbar support 110 is received in the corresponding second hole of the second busbar support 120. This is particularly advantageous when the threaded fastener 150 is made of metal. In particular, by providing the post 114, a creepage distance from the busbar 20 to the threaded fastener 150 can be considerably increased, thereby improving the dielectric performance of the device 10.

In some embodiments (not shown), each of the pair of first transverse portions 111, 113 of the first busbar support 110 comprises a post protruding in the length direction X, and the first hole extend through the post. Correspondingly, the second busbar support 120 is only provided with a hole, not a post. In a state in which the first busbar support 110 and second busbar support 120 are fixed together, the posts are received in the corresponding holes in the second busbar support 120. By providing the posts, the creepage distance from the busbar 20 to the threaded fasteners 150 can also be considerably increased, thereby improving the dielectric performance of the device 10.

In some embodiments, as shown in Fig. 5, the fixing bracket 130 may be disposed at one side in the length direction X of the at least one pair of supports. The threaded fastener 150 may be configured to pass through the first hole of the first busbar support 110 and the second hole of the second busbar support 120 sequentially from the other side in the length direction X of the at least one pair of supports, thereby reaching the side where the fixing bracket 130 is located. At the side where the fixing bracket 130 is located, a nut 152 may be screwed tightly onto the threaded fastener 150, to fix the fixing bracket 130, the first busbar support 110 and the second busbar support 120 together. In the case where posts 114, 124 are disposed in the first hole of the first busbar support 110 and in the second busbar support 120, the dielectric performance can be improved by the insulating material provided by the posts 114, 124. In some embodiments, the nut 152 may be welded to the fixing bracket 130.

In some embodiments, as shown in Fig. 5, the at least one pair of supports may comprise a first pair of supports, a second pair of supports and a third pair of supports arranged adjacently in the width direction Y, wherein the first pair of supports, the second pair of supports and the third pair of supports are configured to receive a first phase busbar, a second phase busbar and a third phase busbar, respectively. The device 10 may also comprise a second fixing bracket 140 arranged at the other side in the length direction X of the at least one pair of supports. The second fixing bracket 140 is configured to connect together the first busbar support 110 of the first pair of supports, the first busbar support 110 of the second pair of supports, and the first busbar support 110 of the third pair of supports. The second fixing bracket 140 may be provided with through-holes 142, through which the threaded fasteners 150 are passed to connect the abovementioned components together.

In some embodiments, as shown in Fig. 5, the first busbar support 110 may comprise a groove 118 at one side in the length direction X, and the shape of the second fixing bracket 140 may be matched with the shape of the groove 118. In some embodiments, the second fixing bracket 140 may be inserted in the groove 118. This can significantly enhance the resistance of the first busbar support 110 to deformation and improve the safety of the system. For example, even if the first busbar support 110 experiences deformation, the first busbar support 110 can be held securely by the second fixing bracket 140, preventing the busbar from shifting between the first busbar support 110 and the second busbar support 120 and the consequent risk of short-circuiting.

In some embodiments, as shown in Fig. 5, the second busbar support 120 may comprise a groove 128 at one side in the length direction X, and the shape of at least part of the fixing bracket 130 may be matched with the shape of the groove 128. In some embodiments, at least part of the fixing bracket 130 may be inserted in the groove 128. This can significantly enhance the resistance of the second busbar support 120 to deformation and improve the safety of the system.

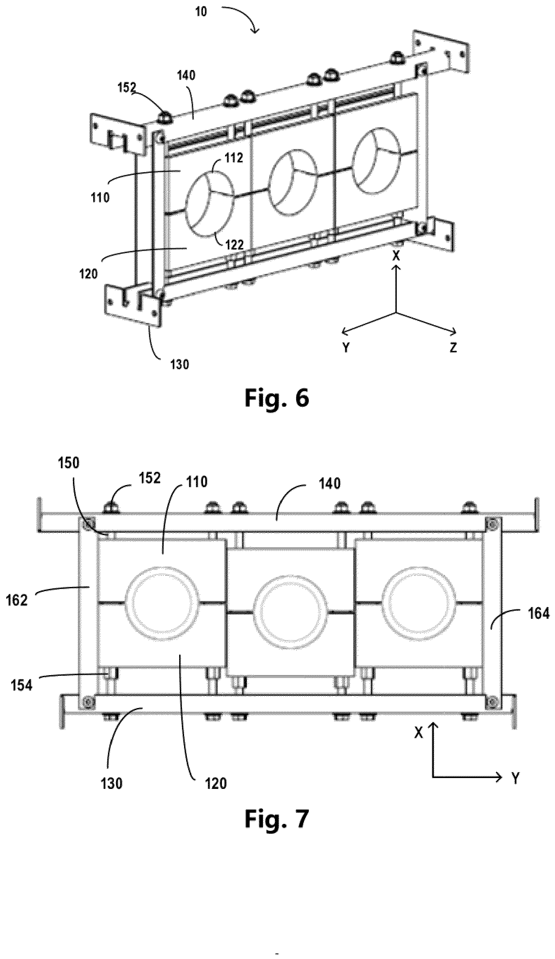

In some embodiments, positions of each pair of supports may be adjusted. This allows different busbars to be arranged offset from each other. In particular, as shown in Figs. 6, 7 and 9, the first pair of supports, the second pair of supports and the third pair of supports may be arranged offset from each other in the length direction. This is particularly beneficial in situations where the busbar machining precision is low or in scenarios where the busbars need to arranged offset from each other. The device 10 may comprise a position adjustment means, configured to adjust the positions of the first pair of supports, the second pair of supports and the third pair of supports along corresponding threaded fasteners 150 of the at least one pair of threaded fasteners 150, in the length direction X.

Figs. 6 - 8 show schematic views of a device 10 for supporting a busbar according to a second embodiment of the present disclosure, which allows positions of each pair of supports to be adjusted. The pairs of supports shown in Figs. 6 - 8 are similar to those in the embodiment shown in Figs. 3 - 5, so the following description focusses on differences with respect to the previous embodiment.

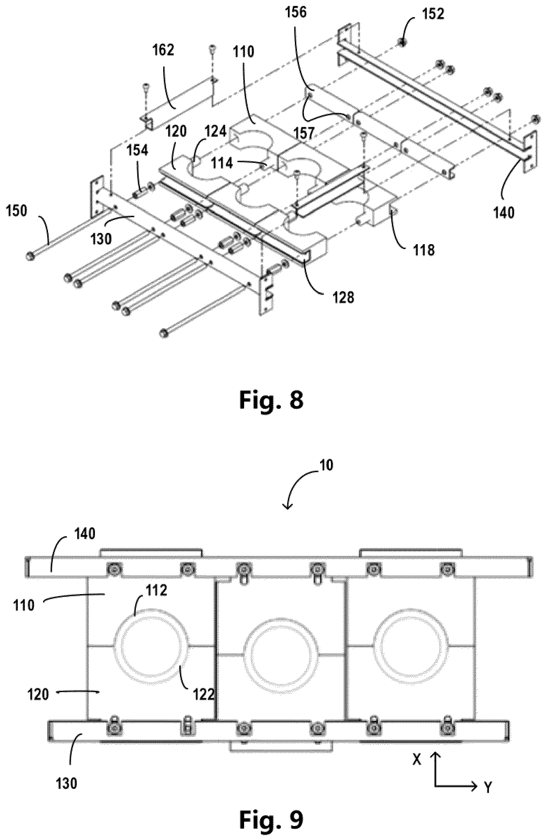

In some embodiments, as shown in Figs. 6 - 8, the position adjustment means may comprise three position adjustment assemblies for the first pair of supports, the second pair of supports and the third pair of supports, respectively. Each position adjustment assembly may comprise a first adjustment member 156 and a pair of second adjustment members 154. The first adjustment member 156 is disposed at a first side in the length direction X of the first busbar support 110 of each pair of supports. In some embodiments, the first adjustment member 156 is an elongated member. In some embodiments, as shown in Fig. 8, the first busbar support 110 may comprise a groove 118, and the first adjustment member 156 may be received in the groove 118. The first adjustment member 156 may comprise a pair of threaded holes 157. The pair of threaded holes 157 are adapted to be passed through by a pair of threaded fasteners 150 and engage with the corresponding threaded fasteners 150 . In some embodiments, the first adjustment member may be made of metal, thereby enhancing the strength of the device 10.

The pair of second adjustment members 154 are disposed at an opposite second side in the length direction X of the second busbar support 120 of each pair of supports. Each second adjustment member 154 is movably disposed on the corresponding threaded fastener 150. Each second adjustment member 154 can be rotated relative to the threaded fastener 150 to change the position of each pair of supports in the length direction X. As an example, the second adjustment member 154 may be in the form of a nut.

When the position adjustment means is in operation, the position of the first adjustment member 156 can be determined according to the position of the busbar 20. Once the position of the busbar 20 has been determined, the positions of the first busbar support 110 and the second busbar support 120 can be moved by rotating the second adjustment members 154 on the threaded fasteners 150, so as to fix the first busbar support 110 and the second busbar support 120 to the first adjustment member 156. In this way, the positions of the first busbar support 110 and the second busbar support 120 can be conveniently adjusted.

In some embodiments, as shown in Fig. 7, the device 10 may also comprise lateral supports 162, 164 to surround the pairs of supports. This further enhances the structural strength of the device.

Figs. 9 - 11 show schematic views of a device 10 for supporting a busbar according to a third embodiment of the present disclosure, which allows the position of each pair of supports to be adjusted. The pairs of supports shown in Figs. 9 - 11 are similar to those in the embodiment shown in Figs. 3 - 5, so the following description focusses on differences with respect to the previous embodiment.

In some embodiments, as shown in Figs. 9 - 11, a first elongated hole 119 may be provided at the first side in the length direction X of the first busbar support 110 of each pair of supports. The first elongated hole 119 extends in the thickness direction Z through the first busbar support 110, and extends at least partially in the length direction X. The first busbar support 110 is fixed to the second fixing bracket 140 by means of a first fastener 172 provided in the thickness direction Z. Similarly, a second elongated hole 129 may be provided at the second side in the length direction X of the second busbar support 120 of each pair of supports. The second elongated hole 129 extends in the thickness direction Z through the second busbar support 120, and extends at least partially in the length direction X, and the second busbar support 120 is fixed to the first fixing bracket 130 by means of a second fastener 174 provided in the thickness direction Z.

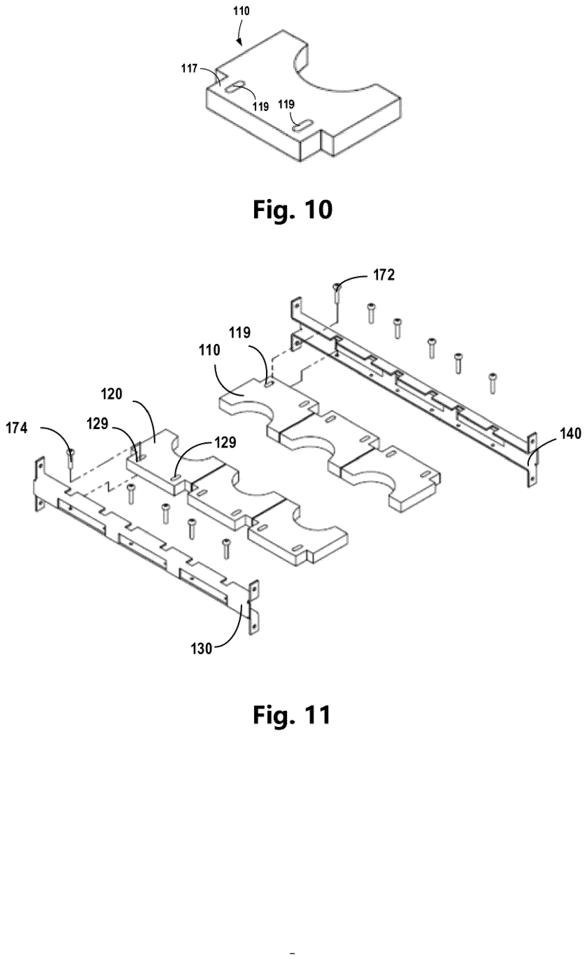

In some embodiments, as shown in Figs. 10 and 11, the first busbar support 110 may comprise a first mounting part 117 protruding from a main body of the first busbar support in the length direction X. The first mounting part 117 comprises two first elongated holes 119. The second busbar support 120 has the same structure as the first busbar support 110. In the illustrated embodiment, the number of first elongated holes 119 is a pair. It will be appreciated that this is merely exemplary, and other numbers of first elongated holes are possible.

In some embodiments, the fixing brackets 130 and 140 may comprise opening slots in which the mounting part 117 of the first busbar support 110 and a mounting part of the second busbar support 120 may be fitted. The fixing brackets 130, 140 may be provided with cutouts at positions corresponding to the elongated holes 119, 129, to facilitate adjustment of the positions of the fasteners 172, 174. It will be appreciated that the embodiment shown is merely exemplary; in other embodiments, the fixing brackets 130 and 140 may be formed in a flat-plate shape.

When adjusting the position of each pair of supports, the positions of the first pair of supports, the second pair of supports and the third pair of supports in the length direction X can be conveniently adjusted by adjusting the positions of the first fasteners 172 and the second fasteners 174 in the corresponding elongated holes in the length direction X. **In** this way, offset adjustment of the busbars can be conveniently achieved.

In addition, although operations have been depicted in a particular order, this should be understood as requiring such operations to be performed in the particular order shown or in a sequential order, or requiring that all illustrated operations be performed to achieve the desired result. In certain circumstances, multitasking and parallel processing might be advantageous. Likewise, while specific implementation details are comprised in the above discussion, these should not be construed as limiting the scope of the disclosure. Certain features described in the context of separate embodiments may also be implemented in combination in a single implementation. Conversely, various features described in the context of a single implementation may also be implemented in multiple implementations individually or in any suitable sub-combination.

Although the present subject matter has been described in language specific to structural features and/or method logical actions, it should be understood that the subject matter defined in the appended claims is not necessarily limited to the particular features or actions described above. Rather, the particular features and actions described above are merely exemplary forms of implementation of the claims.

Embodiments of the present disclosure have been described above; the foregoing description is exemplary, not exhaustive, and not limited to the disclosed embodiments. Many modifications and changes will be obvious to those of ordinary skill in the art without departing from the scope and spirit of the described embodiments. The choice of terms used herein is intended to best explain the principles or practical application of the embodiments, or improvements which they bring to technology on the market, or to enable other persons of ordinary skill in the art to understand the embodiments disclosed herein.

## Claims

1. Device (10) for supporting a busbar (20), comprising:
at least one pair of supports, made of an insulating material and comprising a length direction (X), a width direction (Y) and a thickness direction (Z), each pair of supports comprising:
a first busbar support (110), comprising a first groove (112) extending through the first busbar support (110) in the thickness direction (Z); and
a second busbar support (120), arranged opposite the first busbar support (110) and comprising a second groove (122) extending through the second busbar support (120) in the thickness direction (Z), wherein the first groove (112) and the second groove (122) are arranged opposite each other to form a shape adapted to receive the busbar in the thickness direction (Z), the thickness direction (Z) being parallel to or coincident with a thickness direction (Z) of the busbar; and
a first fixing bracket (130), fixed to the at least one pair of supports and configured to support the at least one pair of supports.

2. Device (10) according to Claim 1, wherein the first busbar support (110) comprises a pair of first holes, which run through the first busbar support (110) in the length direction (X) and are located at two sides of the first groove (112), respectively;
the second busbar support (120) comprises a pair of second holes, which run through the second busbar support (120) in the length direction (X) and are located at two sides of the second groove (122), respectively; and
the device (10) further comprises at least one pair of threaded fasteners (150) extending in the length direction (X), each of the threaded fasteners (150) being configured to extend through the corresponding first hole and the corresponding second hole to fix the first busbar support (110) and the second busbar support (120) to the first fixing bracket (130).

3. Device (10) according to Claim 2, wherein the first busbar support (110) comprises a pair of first transverse portions (111, 113) respectively located at two sides of the first groove (112) in the width direction (Y), the pair of first holes being respectively located at the corresponding first transverse portions (111, 113); and
the second busbar support (120) comprises a pair of second transverse portions respectively located at two sides of the second groove (122) in the width direction (Y), the pair of second holes being respectively located at the corresponding second transverse portions, and in a state in which the at least one pair of supports are fixed together, the pair of first transverse portions (111, 113) are respectively separated from the corresponding second transverse portions by a gap.

4. Device (10) according to Claim 3, wherein only one first transverse portion (111) of the pair of first transverse portions (111, 113) comprises a first post (114) protruding in the length direction (X), the first post (114) being provided with a hole (115) allowing the threaded fastener (150) to pass through, and the first post (114) being received in the corresponding second hole; and
only one second transverse portion (111) of the pair of second transverse portions comprises a second post (124) protruding in the length direction (X), the second post (124) being provided with a hole allowing the threaded fastener (150) to pass through, and the second post (114) being received in the corresponding first hole.

5. Device (10) according to Claim 3, wherein each of the pair of first transverse portions (111, 113) comprises a post protruding in the length direction (X), the first hole extending through the post, and in a state in which the first busbar support (110) and the second busbar support (120) are fixed together, the post is received in the corresponding second hole.

6. Device (10) according to any one of Claims 2 - 5, wherein the first fixing bracket (130) is disposed at one side in the length direction (X) of the at least one pair of supports, and the first fixing bracket (130) is fastened to the threaded fastener (150) by means of at least one nut (152).

7. Device (10) according to any one of Claims 2 - 6, wherein the threaded fastener (150) and the first fixing bracket (130) are both made of a metal material.

8. Device (10) according to any one of Claims 2 - 7, wherein the at least one pair of supports comprises a first pair of supports, a second pair of supports and a third pair of supports arranged adjacently in the width direction (Y), the first pair of supports, the second pair of supports and the third pair of supports being configured to receive a first phase busbar, a second phase busbar and a third phase busbar, respectively;
the first fixing bracket (130) is disposed at one side in the length direction (X) of the at least one pair of supports, and is configured to connect together the second busbar support (120) of the first pair of supports, the second busbar support (120) of the second pair of supports, and the second busbar support (120) of the third pair of supports; and
the device (10) further comprises a second fixing bracket (140) disposed at the other side in the length direction (X) of the at least one pair of supports, the second fixing bracket (140) being configured to connect together the first busbar support (110) of the first pair of supports, the first busbar support (110) of the second pair of supports, and the first busbar support (110) of the third pair of supports.

9. Device (10) according to Claim 8, further comprising a position adjustment means, configured to adjust positions of the first pair of supports, the second pair of supports and the third pair of supports along corresponding threaded fasteners (150) of the at least one pair of threaded fasteners (150) in the length direction (X).

10. Device (10) according to Claim 9, wherein the position adjustment means comprises three position adjustment assemblies for the first pair of supports, the second pair of supports and the third pair of supports, respectively, each of the position adjustment assemblies comprising:
a first adjustment member (156), disposed at a first side in the length direction (X) of the first busbar support (110) of each pair of supports and comprising a pair of threaded holes, the pair of threaded holes being adapted to be passed through by the pair of threaded fasteners (150) and engage with the corresponding threaded fasteners (150);
a pair of second adjustment members (154), disposed at a second side in the length direction (X) of the second busbar support (120) of each pair of supports and movably disposed on the corresponding threaded fasteners (150), the second side being opposite the first side, and each second adjustment member (154) of the pair of second adjustment members (154) being rotatable relative to the threaded fastener (150) to change the position of said each pair of supports in the length direction (X).

11. Device (10) according to Claim 10, wherein the first busbar support (110) comprises a groove (118) at the first side, the groove (118) receiving the first adjustment member (156) in a shape-fitted manner.

12. Device (10) according to any one of Claims 9 - 11, wherein the position adjustment means comprises:
a first elongated hole (119) disposed at a first side in the length direction (X) of the first busbar support (110) of each pair of supports, the first elongated hole (119) extending through the first busbar support (110) in the thickness direction (Z) and extending at least partially in the length direction (X), the first busbar support (110) being fixed to the second fixing bracket (140) by means of a first fastener (172) provided in the thickness direction (Z); and
a second elongated hole (129) disposed at a second side in the length direction (X) of the second busbar support (120) of each pair of supports, the second side being opposite the first side, the second elongated hole (129) extending through the second busbar support (120) in the thickness direction (Z) and extending at least partially in the length direction (X), the second busbar support (120) being fixed to the first fixing bracket (130) by means of a second fastener (174) provided in the thickness direction (Z);
wherein the position adjustment means is configured to adjust positions of the first fastener (172) and the second fastener (174) in the corresponding elongated holes in the length direction (X), so as to adjust the positions of the first pair of supports, the second pair of supports and the third pair of supports in the length direction (X).

13. Device (10) according to any one of Claims 9 - 12, wherein the first busbar support (110) comprises a first mounting part (117) protruding from a main body of the first busbar support in the length direction (X), the first mounting part (117) comprising two said first elongated holes (119); and
the second busbar support (120) comprises a second mounting part protruding from a main body of the second busbar support in the length direction (X), the second mounting part comprising two said second elongated holes (129).

14. Device (10) according to any one of Claims 1 - 13, wherein the busbar (20) comprises a tubular cross section.

15. Switchgear comprising:
at least one busbar (20); and
at least one device (10) for supporting a busbar according to any one of Claims 1 - 14.
